# EUROPÄISCHE PATENTANMELDUNG

(11) **EP 1 361 650 A1**
(43) Veröffentlichungstag der Anmeldung: **12.11.2003**
(21) Anmeldenummer: 02028225.7
(22) Anmeldetag: 16.12.2002
(51) Int. Cl.: H02M 3/156

(54) **Elektronisches Steuergerät mit getaktetem Spannungsregler**

(30) Priorität: 10.05.2002 DE 10220784
(71) Anmelder: ROBERT BOSCH GMBH, 70442 Stuttgart (DE)
(72) Erfinder: Winter, Klaus, 71701 Schwieberdingen (DE); Mayer, Hermann, 71665 Vaihingen (DE); Wrede, Martin, 72770 Reutlingen (DE); Schmauder, Wolfgang, 72829 Engstingen (DE); Klein, Alexander, 71735 Eberdingen (DE); Hilsebecher, Joerg, 70839 Gerlingen (DE); Hauk, Joachim, 71272 Renningen-Malmsheim (DE); Rosahl, Thoralf, 72760 Reutlingen (DE)

(57) **Zusammenfassung**

Elektronisches Steuergerät mit einem getakteten Spannungsregler (12) und einem Taktgeber (16) zur Erzeugung eines Systemtaktes (f2) für das Steuergerät (10), dadurch gekennzeichnet, daß der Takt des Spannungsreglers (12) mit dem Systemtakt (f2) synchronisiert ist.

## Beschreibung

Die Erfindung betrifft ein elektronisches Steuergerät mit einem getakteten Spannungsregler und einem Taktgeber zur Erzeugung eines Systemtaktes für das Steuergerät.

### STAND DER TECHNIK

Elektronische Steuergeräte, beispielsweise für die Steuerung verschiedener Funktionen in Kraftfahrzeugen, sind heute zumeist in Digitaltechnik ausgeführt, beispielsweise als Mikrocomputer oder Mikrocontroller und arbeiten demzufolge mit einem bestimmten Systemtakt, der die Verarbeitungsgeschwindigkeit im Steuergerät bestimmt. Für die Betriebsspannungsversorgung des Steuergerätes wird in der Regel eine Gleichspannungsquelle benötigt, wie sie in Kraftfahrzeugen im Prinzip in Form der Fahrzeugbatterie zur Verfügung steht. Häufig benötigen jedoch das Steuergerät und die von ihm gesteuerten Komponenten eine Betriebsspannung, die von der Batteriespannung verschieden ist. So arbeiten z.B. Steuergeräte für Fahrerassistenzsysteme oder radargestützte Abstands- und Geschwindigkeitsregelsysteme (ACC; Adaptive Cruise Control) in Kraftfahrzeugen generell mit einer Betriebsspannung von 5V und für den Betrieb einer Gunn-Diode im Radarsensor eines solchen Systems wird eine Spannung von 8V benötigt. Außerdem unterliegt die Batteriespannung (12V) relativ starken, vom Ladezustand der Batterie abhängigen Schwankungen, die für den Betrieb des Steuergerätes nicht akzeptabel sind, insbesondere nicht bei sensiblen, sicherheitsrelevanten Systemen. Für die Spannungsversorgung des Steuergerätes wird deshalb ein Spannungsregler eingesetzt, der die Batteriespannung in eine stabilisierte Gleichspannung umwandelt, die für den Betrieb des Steuergerätes und/oder anderer Komponenten geeignet ist.

Es sind getaktete Spannungsregler bekannt, bei denen die Batteriespannung in eine getaktete Spannung mit regelbarer Impulsbreite umgewandelt und anschließend wieder geglättet wird, so daß man eine über das Tastverhältnis geregelte und somit stabile Ausgangsspannung in der gewünschten Höhe erhält. Häufig sind solche getakteten Spannungsregler wegen ihrer geringeren Verlustleistung gegenüber linearen Spannungsreglern bevorzugt.

Ein Nachteil der getakteten Spannungsregler besteht jedoch darin, daß durch den Takt Störsignale erzeugt werden, die die Funktion anderer, in der Nähe befindlicher elektronischer Komponenten und natürlich insbesondere die Funktion des Steuergerätes selbst stören können. Zur Unterdrückung dieser Störsignale sind bisher aufwendige Entstörfilter und/oder Entstörmaßnahmen erforderlich.

### AUFGABE, LÖSUNG UND VORTEILE DER ERFINDUNG

Aufgabe der Erfindung ist es, ein elektronisches Steuergerät mit getaktetem Spannungsregler zu schaffen, bei dem durch den Takt des Spannungsreglers bedingte Störungen ohne aufwendige Entstörmaßnahmen unterdrückt werden können.

Diese Aufgabe wird erfindungsgemäß dadurch gelöst; daß der Takt des Spannungsreglers mit dem Systemtakt synchronisiert ist.

Digitale Steuergeräte und andere Steuergeräte, die mit einem bestimmten Systemtakt arbeiten, sind generell so ausgelegt, daß sich für die in dem Gerät benutzten Schaltfrequenzen und deren Oberwellen nach dem Nyquist-Kriterium eine optimale Störsignalunterdrückung ergibt. Erfindungsgemäß wird nun durch die Synchronisation des Spannungsreglers mit dem Systemtakt erreicht, daß auch der getaktete Spannungsregler in diese Störsignalunterdrückung mit einbezogen wird, so daß auf zusätzliche Entstörmaßnahmen weitgehend verzichtet werden kann.

Vorteilhafte Ausgestaltungen der Erfindung ergeben sich aus den Unteransprüchen.

Bevorzugt bildet der getaktete Spannungsregler die Betriebsspannungsquelle für das Steuergerät und damit auch für den Taktgeber, der zur Erzeugung des Systemtaktes dient. Beim Einschalten des Gerätes vergeht jedoch eine bestimmte Zeit, bis der zur Erzeugung des Systemtaktes benutzte Oszillator voll eingeschwungen ist. In dieser Einschwingphase steht unter Umständen noch kein nutzbares Taktsignal für den Spannungsregler zur Verfügung. Gemäß einer vorteilhaften Weiterbildung der Erfindung weist deshalb der Spannungsregler einen Hilfsoszillator und ein Schaltglied auf, das erst nach der Einschwingphase von dem Hilfsoszillator auf den Taktgeber des Steuergerätes umschaltet. In der verhältnismäßig kurzen Einschaltphase wird daher der Takt für den Spannungsregler vom Hilfsoszillator bereitgestellt, und erst danach, wenn der Oszillator im Taktgeber des Steuergerätes voll eingeschwungen ist und somit der Taktgeber ein stabiles Taktsignal liefert, wird von dem Hilfsoszillator auf den Taktgeber umgeschaltet, so daß dann während des eigentlichen Betriebs des Steuergerätes der Spannungsregler mit dem Systemtakt synchronisiert ist. Der Umschaltzeitpunkt kann durch Überwachung des Signals des Taktgebers bzw. der Spannung des Oszillators bestimmt werden. Da jedoch die Einschwingzeit des Oszillators normalerweise reproduzierbar innerhalb bestimmter Grenzen liegt, kann der Umschaltzeitpunkt auch mit Hilfe eines Zeitgliedes bestimmt werden, das im Steuergerät, im Spannungsregler oder irgendeiner anderen Systemkomponente implementiert ist.

In bestimmten Anwendungsfällen läßt sich die Störsignalunterdrückung durch geeignete Einstellung der Phasenverschiebung zwischen dem Systemtakt und dem Takt des Spannungsreglers weiter optimieren. In diesem Fall wird der Spannungsregler nicht unmittelbar durch den Systemtakt angesteuert, sondern über ein geeignet ausgelegtes Phasenverzögerungsglied.

### KURZBESCHREIBUNG DER ZEICHNUNGEN

Im folgenden werden Ausführungsbeispiele der Erfindung anhand der Zeichnung näher erläutert.

Es zeigen:
- Fig. 1: eine Schaltskizze eines elektronischen Steuergerätes mit zugehörigem Spannungsregler;
- Fig. 2: ein Zeitdiagramm für verschiedene Signale in der Schaltung gemäß Figur 1; und
- Fig. 3: eine Schaltskizze eines Steuergerätes mit Spannungsregler gemäß einer abgewandelten Ausführungsform.

### BESCHREIBUNG VON AUSFÜHRUNGSBEISPIELEN

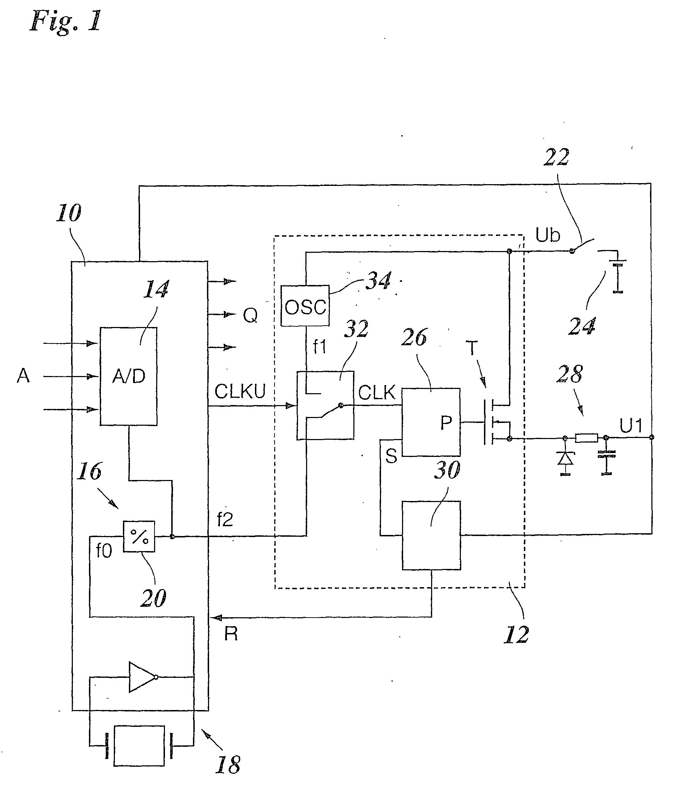

In Figur 1 sind als Blockdiagramm ein Steuergerät 10 und ein zugehöriger Spannungsregler 12 dargestellt. Bei dem Steuergerät 10 handelt es sich um ein digitales Steuergerät, beispielsweise einen Mikrocontroller, der im Rahmen eines ACC-Systems zur radargestützten Abstands- und Geschwindigkeitsregelung eines Kraftfahrzeugs eingesetzt wird. Das Steuergerät 10 empfängt analoge Eingangssignale A von einem nicht gezeigten Radarsensor und enthält einen integrierten Analog/Digital-Umsetzer 14, der die analogen Eingangssignale in digitale Signale umsetzt, die dann in dem Steuergerät 10 weiter verarbeitet werden. Das Resultat dieser Signalverarbeitung sind digitale Ausgangssignale Q, die dann an andere, nicht gezeigte Systemkomponenten übermittelt werden. Beispielsweise repräsentieren die Ausgangssignale Q die Abstände, Relativgeschwindigkeiten und Richtungswinkel von Objekten, die von dem Radarsensor geortet wurden.

Dem Steuergerät 10 ist ein Taktgeber 16 zugeordnet, der eine Oszillatorschaltung 18 und einen Frequenzteiler 20 umfaßt. Die Oszillatorschaltung 18 erzeugt ein Frequenzsignal f0, aus dem dann im Frequenzteiler 20 durch Frequenzteilung ein Systemtakt f2 gebildet wird. Der Systemtakt f2 bestimmt die Schaltfrequenz im Steuergerät 10 und wird u.a. dem Analog/Digital-Umsetzer 14 zugeführt, so daß er auch die Abtastfrequenz dieses Umsetzers bestimmt. Die Frequenz des Systemtaktes f2 und die Schaltelemente im Steuergerät 10 sind in bekannter Weise so aufeinander abgestimmt, daß bei der digitalen Signalverarbeitung einerseits eine möglichst hohe Verarbeitungsgeschwindigkeit und andererseits eine ausreichende Störsignalunterdrückung erreicht wird.

Der Spannungsregler 12 erzeugt die Betriebsspannung U1 von beispielsweise 5V für das Steuergerät 10 einschließlich des Taktgebers 16 und wird seinerseits über einen Schalter 22 und eine Batterie 24, beispielsweise die Fahrzeugbatterie, mit einer Gleichspannung von etwa 10 bis 12V versorgt.

Wenn der Schalter 22 geschlossen ist, wird die Batteriespannung Ub mit Hilfe eines Transistors T getaktet. Der Transistor T wird durch eine Impulsformerschaltung 26 mit einem impulsweitenmodulierten Signal P angesteuert. Das Tastverhältnis dieses Signals bestimmt die Höhe der Spannung U1 im Verhältnis zur Batteriespannung Ub. Dem Ausgang des Transistors T ist ein Filternetzwerk 28 zum Glätten der getakteten Spannung nachgeschaltet, so daß man schließlich eine geglättete Gleichspannung erhält, die dem Steuergerät 10 als Betriebsspannung U1 zugeführt wird. Die Spannung U1 wird außerdem an einen Vergleicher 30 zurückgemeldet, der durch Soll/Ist-Vergleich ein Steuersignal S bildet, das der Impulsformerschaltung 26 zugeführt wird und dort die impulsweite des Signals P bestimmt. Auf diese Weise wird die Höhe der Spannung U 1 in einem geschlossenen Regelkreis geregelt.

Wenn sich die Spannung U 1 aufgebaut hat, liefert der Vergleicher 30 an das Steuergerät 10 ein Signal R, das einen Reset für das Steuergerät freigibt.

Die Impulsformerschaltung 26 erhält ein Taktsignal CLK von einem Schaltglied 32, das den Takteingang der Impulsformerschaltung 26 je nach Schaltstellung entweder mit dem Systemtakt f2 des Steuergerätes 10 oder mit einem Hilfstakt f1 eines Hilfsoszillators 34 verbindet. Das Umschalten des Schaltgliedes 32 wird durch ein vom Steuergerät 10 geliefertes Signal CLKU gesteuert.

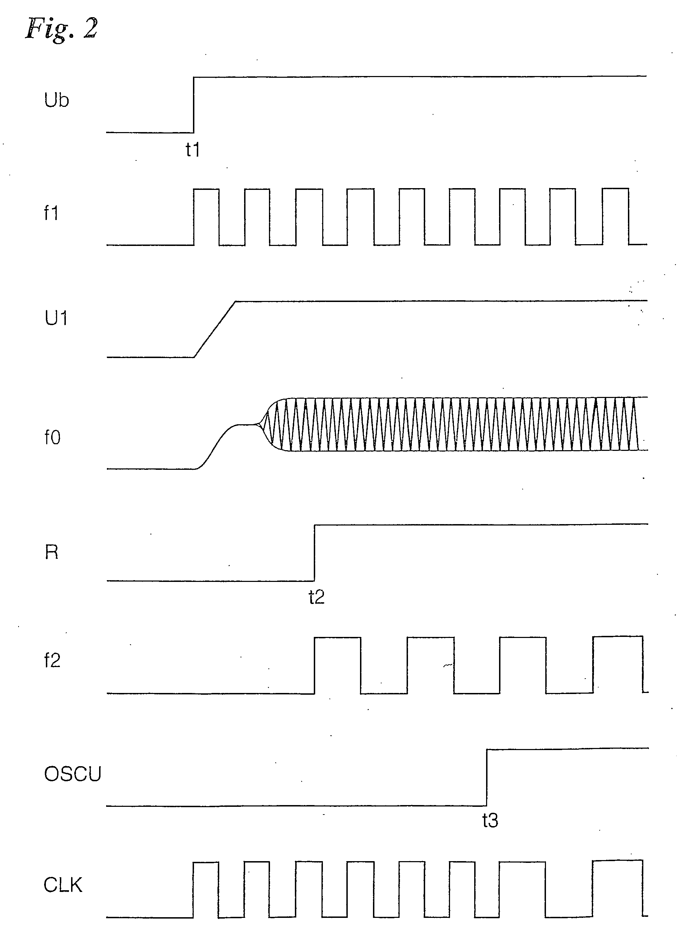

Anhand von Figur 2 soll nun der zeitliche Ablauf beim Einschalten des Steuergerätes 10 und des Spannungsreglers 12 erläutert werden.

Zum Zeitpunkt t1 wird der Schalter 22 geschlossen und damit die Batteriespannung Ub an den Transistor T und an den Hilfsoszillator 34 angelegt. Der Hilfsoszillator 34 gibt daraufhin das pulsierende Hilfstaktsignal f1 aus.

Das Schaltglied 32 ist im Anfangszustand nicht in der in Figur 1 gezeigten Stellung, sondern in der Stellung, in der es den Hilfsoszillator 34 mit dem Takteingang der Impulsformerschaltung 26 verbindet. Das Taktsignal CLK, das der Impulsformerschaltung 26 zugeführt wird, ist daher zunächst mit dem Hilfstakt f1 identisch. Während der ersten Takte dieses Signals steigt die durch das Filternetzwerk 28 geglättete Spannung U1 von 0 auf annähernd ihren Sollwert von 5V an. Das Steuergerät 10 wird so mit Betriebsspannung versorgt, und die Oszillatorschaltung 18 schwingt ein und erzeugt das Frequenzsignal f0.

Wenn zu einem Zeitpunkt t2 die Oszillatorschaltung 18 voll eingeschwungen ist, liefert der Spannungsregler 12 das Signal R an das Steuergerät 10, und das Steuergerät nimmt seinen Betrieb auf. Im gezeigten Beispiel wird das Signal R vom Vergleicher 30 erzeugt. Wahlweise kann dieses Signal R jedoch auch mit Hilfe eines in den Spannungsregler 12 integrierten Zeitgliedes nach Ablauf einer geeignet gewählten Zeitspanne nach dem Zeitpunkt t1 erzeugt werden.

Zum Zeitpunkt t2 wird auch der Frequenzteiler 20 aktiviert, der den Systemtakt f2 für das Steuergerät liefert. Das Steuergerät 10 erfüllt u.a. die Funktion eines Zeitgliedes und liefert nach Ablauf einer festen Zeitspanne nach dem Zeitpunkt t2, zum Zeitpunkt t3, das Signal OSCU an das Schaltglied 32. Hierdurch wird das Schaltglied 32 in die in Figur 1 gezeigte Stellung umgeschaltet, so daß es nun den Takteingang der Impulsformerschaltung 26 mit dem Systemtakt f2 verbindet. Vom Zeitpunkt t3 an ist daher das Taktsignal CLK mit dem Systemtakt f2 identisch, und während des nachfolgenden Betriebs des Steuergerätes 10 ist der Spannungsregler 12 mit dem Systemtakt f2 synchronisiert. Hierdurch ist sichergestellt, daß die durch den Takt des Spannungsreglers 12 erzeugten Störsignale die Funktion des Steuergerätes 10 ebensowenig stören wie die Störsignale, die durch den Systemtakt f2 verursacht werden.

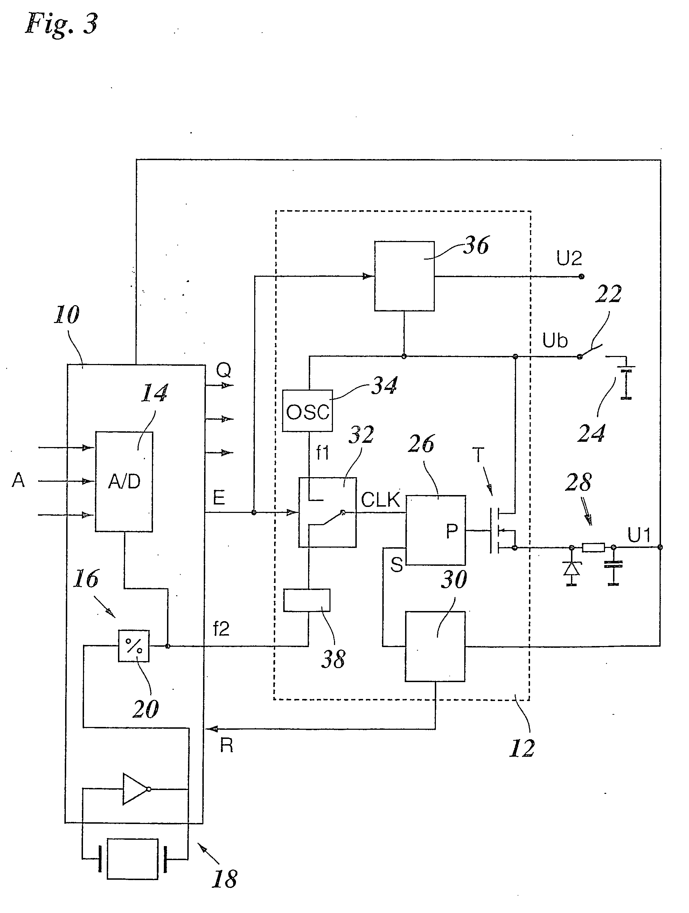

Figur 3 zeigt ein abgewandeltes Ausführungsbeispiel, das sich von dem in Figur 1 gezeigten Ausführungsbeispiel dadurch unterscheidet, daß der Spannungsregler 12 zusätzlich einen linearen Spannungsregler 36 enthält. Dieser Spannungsregler 36 erzeugt eine geregelte Gleichspannung U2 von beispielsweise 8V, die als Betriebsspannung für eine Gunn-Diode des Radarsensors benötigt wird.

Das Steuergerät 10 erzeugt hier anstelle des Umschaltsignals CLKU ein Einschaltsignal E, mit dem der lineare Spannungsregler 36 unabhängig von den übrigen Komponenten des Spannungsreglers 12 einschaltbar ist. Das Einschaltsignal E bildet zugleich das Signal zum Umschalten des Schaltgliedes 32 auf den Systemtakt f2. Diese Lösung hat den Vorteil, daß durch das Schaltglied 32 und den Spannungsregler 36 nur ein einziger Ausgang des Steuergerätes 10 belegt wird.

Weiterhin ist bei dem in Figur 3 gezeigten Beispiel in die Leitung, über die der Systemtakt f2 dem Schaltglied 32 und dann der Impulsformerschaltung 26 zugeführt wird, ein Phasenverzögerungsglied 38 eingefügt. Mit Hilfe dieses Phasenverzögerungsgliedes 38 kann die Phasenverschiebung zwischen dem Systemtakt f2 und dem Taktsignal CLK so eingestellt werden, daß die Störsignalunterdrükkung optimiert wird.

## Patentansprüche

1. Elektronisches Steuergerät mit einem getakteten Spannungsregler (12) und einem Taktgeber (16) zur Erzeugung eines Systemtaktes (f2) für das Steuergerät (10), **dadurch gekennzeichnet, daß** der Takt des Spannungsreglers (12) mit dem Systemtakt (f2) synchronisiert ist.

2. Steuergerät nach Anspruch 1, **dadurch gekennzeichnet, daß** die vom Spannungsregler (12) erzeugte Spannung (U1) die Betriebsspannung des Steuergerätes (10) ist.

3. Steuergerät nach Anspruch 2, **dadurch gekennzeichnet, daß** der Spannungsregler (12) einen Hilfsoszillator (36) zur Erzeugung eines Hilfstaktes (f1) sowie ein Schaltglied (32) zum Umschalten des Taktes des Spannungsreglers (12) vom Hilfstakt (f1) auf den Systemtakt (f2) aufweist.

4. Steuergerät nach Anspruch 3, **dadurch gekennzeichnet, daß** das Schaltglied (32) ein Umschaltsignal (CLKU; E) zum Umschalten auf den Systemtakt (f2) zu einem Zeitpunkt (t3) nach dem Einschalten des Spannungsreglers (12) erhält, zu dem eine Oszillatorschaltung (18) des Taktgebers (16) eingeschwungen ist.

5. Steuergerät nach Anspruch 4, **dadurch gekennzeichnet, daß** das Umschaltsignal (CLKU; E) vom Steuergerät (10) erzeugt wird.

6. Steuergerät nach Anspruch 5, **dadurch gekennzeichnet, daß** das Umschaltsignal (CLKU; E) mit einer festen Zeitverzögerung nach dem Einschalten oder einem Reset des Steuergerätes (10) erzeugt wird.

7. Steuergerät nach Anspruch 5 oder 6, **dadurch gekennzeichnet, daß** das Umschaltsignal (E) zugleich ein Einschaltsignal für einen zweiten Spannungsregler (36) bildet.

8. Steuergerät nach einem der vorstehenden Ansprüche, **dadurch gekennzeichnet, daß** es einen Analog/Digital-Umsetzer (14) enthält, der durch den Systemtakt (f2) angesteuert wird.

9. Steuergerät nach einem der vorstehenden Ansprüche, **dadurch gekennzeichnet, daß** es für den Einbau in ein Kraftfahrzeug ausgebildet ist und daß der Spannungsregler (12) durch die Fahrzeugbatterie (24) gespeist wird.

10. Steuergerät nach Anspruch 9, **dadurch gekennzeichnet, daß** es als Steuergerät für ein radargestütztes Abstandsregelsystem im Kraftfahrzeug ausgebildet ist.

11. Steuergerät nach einem der vorstehenden Ansprüche, **gekennzeichnet durch** ein Phasenverzögerungsglied (38) zum Einstellen der Phasenverschiebung zwischen dem Takt des Spannungsreglers (12) und dem Systemtakt (f2).
